# EUROPEAN PATENT SPECIFICATION

(11) **EP 0 397 623 B1**
(45) Date of publication and mention of the grant of the patent: **04.05.1994**
(21) Application number: 90830205.2
(22) Date of filing: 09.05.1990
(51) Int. Cl.: H01M 4/88, B05D 3/10, C08J 7/12

(54) **Process for preparing hydrophobic material**
Verfahren zur Herstellung von hydrophobem Material
Procédé pour préparer un matériau hydrophobe

(30) Priority: 12.05.1989 JP 119824/89
(43) Date of publication of application: 14.11.1990
(73) Proprietor: TANAKA KIKINZOKU KOGYO K.K., Chuo-ku Tokyo 103 (JP); Watanabe, Masahiro, Kofu-shi Yamanashi (JP)
(72) Inventor: Watanabe, Masahiro, Kofu-shi, Yamanashi (JP)
(74) Representative: Pellegri, Alberto

(56) References cited:
- EP-A- 0 157 180
- FR-A- 2 119 798
- PATENT ABSTRACTS OF JAPAN, vol. 7, no. 34 (C-150), 10th February 1983; & JP-A-57 187 329 (NIPPON GENSHIRYOKU KENKYUSHO) 18-11-1982
- PATENT ABSTRACTS OF JAPAN, vol. 7, no. 292 (E-219)[1437], 27th December 1983; & JP-A-58 166 647 (MITSUBISHI DENKI K.K.) 01-10-1983

## Description

### BACKGROUND OF INVENTION

### Field of Invention

The present invention relates to a process for preparing hydrophobic material, more in particular to a process for easily providing hydrophobicity to almost the entire surface of a material to be used, for example, in a fuel cell.

### Description of Background Art

The gas diffusion layer of a gas diffusion electrode for a fuel cell and the like, consisting of a catalyst layer and a gas diffusion layer, is formed by applying the mixture of, for instance, the fine particles of carbon black, and the like, and of hydrophobic polytetrafluoroethylene (hereinafter referred to as "PTFE") or by adhering the PTFE on a carbon sheet and sintering it. Addition of plenty of PTFE to the gas diffusion electrode is required for maintaining the ability of supplying gas for a long period of time, by retarding the lowering of this ability due to a progressive blocking of pores among the carbon black particles, which brings about a lowering of the cell performance.

On the other hand, the catalyst layer provides gas passages and electrolyte passages, and a reaction gas supplied through the gas diffusion layer diffuses in the gas passage of the catalyst layer to be dissolved in the electrolyte that encroaches into the gas passages so that an electrode reaction can occur on the catalyst in contact with the electrolyte.

When, however, the ability of supplying gas to the catalyst layer decreases because the electrolyte has permeated deep into the gas passages after a long period of operation, as observed in, for example, a phosphoric acid type fuel cell, and the like, considerable lowering of the cell performance may be observed. If the amount of a hydrophobic agent is increased to prevent this decline in performance, the electrolyte may find difficulty in permeating into the catalyst layer. As a consequence, the catalyst cannot participate to the reaction and this also lowers cell performance.

In order to overcome these drawbacks, the present inventor had proposed a process for providing hydrophobicity wherein most of the surface of fine particles or fine fibers is coated with synthesized hydrophobic fine particles having an average particle size not greater than that of the fine particles or the fine fibers, by direct polymerization of the corresponding monomer (United States patent application No. ).

Since almost all the surface of the hydrophobic material prepared by said process is coated with polymerized hydrophobic particles, the material possesses excellent properties and characteristics to prevent permeation by the electrolyte. Since, however, the process requires a step in which the monomer of the hydrophobic polymer particles is polymerized on the surface of a hydrophobic material, which is somewhat difficult to be performed, the present inventor has searched for a process for imparting hydrophobicity to a material that would be easier to perform and has reached the present invention.

### SUMMARY OF INVENTION

Accordingly, it is an object of the invention to provide a process for preparing a hydrophobic material, in other words, for imparting hydrophobicity to a material.

It is another object of the invention to provide a process for preparing a hydrophobic material suitable for use in a fuel cell.

It is a further object of the invention to provide a process for preparing a hydrophobic material with excellent characteristics by means of an easier operation.

In accordance with the present invention, a process for preparing a hydrophobic material comprises applying a hydrocarbon polymer compound solution to the surface of the material to be treated, evaporating the solvent of the solution, and then fluorinating the polymer compound to coat the surface of the material to be treated with a fluorinated polymer compound.

In providing hydrophobicity to a material to be treated, the present invention contemplates applying a hydrocarbon polymer compound solution to the surface of the material to be treated, and then fluorinating the polymer compound to coat the surface of the material to be treated with a fluorinated polymer compound to impart hydrophobic character to the material to be treated.

Since such a polymer compound as polyethylene, polypropylene and the like, coats the surface of the treated material and then is fluorinated, the coating layer is uniformly formed on the entire surface of the material to be treated. Accordingly, when the hydrophobically treated material is employed in an anode structure of a fuel cell for a long period of time, an electrolyte does not permeate through the pores of the hydrophobic coating and the ability of gas supply is not lowered due to the progressive flooding of the gas passages.

Since the hydrophobic treatment can be carried out at a low price according to the invention, the process of this invention can also be exploited for the surface treatment of an industrial reaction apparatus and other utensils for daily use.

### DESCRIPTION OF PREFERRED EMBODIMENTS

The present invention will now be described in detail with reference to its preferred embodiments.

Instead of the above mentioned prior process of the present inventor which comprised polymerizing the monomer on the surface of the treated material to form the polymerized hydrophobic coating, the present invention is characterized in that the hydrophobicity is elevated by applying a solution of a hydrocarbon polymer compound, already polymerized, to the surface of a material to be treated and by evaporating the solvent of the solution, followed by fluorinating the polymer compound.

An article to which hydrophobicity may be imparted according to the present invention includes, for example, a carbon black and a carbon paper, employed as electrode materials of a fuel cell, other carbon plates and metal manifolds for a fuel cell stack or the like, and the invention is further applicable for an anti-corrosion treatment of the inner surface of an industrial reactor, and for an anti-corrosion and hydrophobicity treatment of a daily use utensil.

Therefore, the above articles may be employed as the material to be treated. The forms of the material may not be restricted, and such forms as particulate, sheet, plate, cylindrical or the like may be employed.

Although the choice of the hydrocarbon polymer compound is not restricted so long as it is soluble in a solvent, polymers such as polyethylene, polypropylene and the like or copolymers of their monomers are conveniently employed from the standpoint of their solubility and low cost. Although the choice of the solvent is not restricted so long as it dissolves said compound, a hydrocarbon solvent such as heptane is preferably employed.

The method employed for coating the material to be treated with a hydrocarbon polymer compound dissolved in the solvent is not especially restricted. The solution may be applied by brushing or spraying, or the material to be treated itself may be dipped in the solution. The solvent is then evaporated from the solution layer applied to the surface by means of heat drying or air drying to form a coating layer of the polymer compound. The thickness of the coating layer is preferably not more than 0.1 µm from the standpoint of economy and permeability. If a sufficient thickness cannot be obtained by a single coating and drying operation, a number of similar operations may be repeated.

A fluorine gas is then contacted with the surface of the material to be treated on which the coating layer of the hydrocarbon polymer compound has been formed, to fluorinate (substitute with fluorine) the hydrogen atoms of the compound to obtain a high hydrophobicity. The fluorine gas to be introduced is more effective as a fluorinating agent after having been diluted with such an inert gas as argon, from the standpoint of better controlling the reaction because the reactivity of the fluorine gas is extremely high. Fluorination reaction may be performed under heating, but generally the fluorinating reaction proceeds at a sufficient rate when the fluorine gas is introduced at room temperature.

Not all the hydrogen atoms of the hydrocarbon polymer compound are required to be substituted by fluorine, and usually about 50 % of substitution provides sufficient hydrophobicity. However, nearly 100 % substitution is desirable from a standpoint of anti-corrosion.

A coating layer is almost uniformly formed on the material constituting a fuel cell or other elements or the like hydrophobically treated according to the process of this invention because the polymer compound dissolved in the solution is applied onto the surface, so that all the surface possesses almost uniform hydrophobicity. Accordingly, when the hydrophobically treated material is employed as an anode in a fuel cell for a long period of time, an electrolyte does not permeate through the pores of the hydrophobic coating and the ability of supplying gas is not lost due to a flooding of the gas passages.

Since the hydrophobic treatment can be carried out according to the invention at a low price, the process of this invention can be applied for the surface treatment of an industrial reactor and other utensils of daily use.

Although the present invention will be described in detail with reference to the following Examples in connection with glassy carbon which is the material for a fuel cell, a carbon paper substrate of a gas diffusion electrode and carbon black, respectively, the present invention shall not be restricted thereto.

### Example 1

3 g of polyethylene with an average molecular weight of 250,000 was dissolved in 100 ml of heptane to form a film-forming solution.

After, a commercially available carbon paper substrate (100 mm in length, 100 mm in width, 0.4 mm in thickness, 15 µm of average particle diameter) was dipped in the film-forming solution and the solvent heptane was evaporated, these steps were repeated to form 5 weight % of a polyethylene coat based on the weight of the substrate. After, the coated substrate was put in a stainless steel reactor, a fluorine gas diluted to 10 % with argon was introduced into the reactor for 30 minutes at room temperature to fluorinated the polyethylene and produce a hydrophobic substrate (Example).

For comparison, after a similar carbon paper substrate was impregnated in and treated with a dispersion consisting of a solvent and PTFE dispersed therein so that 5 % of the PTFE based on the weight of the substrate was deposited, the substrate was heat treated for 30 minutes at 330 °C to obtain a hydrophobic substrate (Comparative Example).

Both hydrophobic substrates were set afloat on 100% phosphoric acid and the temperature was maintained at 200 °C for 50 hours, the substrate of the Example continued to float while the phosphoric acid penetrated into the substrate of the Comparative Example, which sunk.

### Example 2

The film-forming solution diluted with heptane of Example 1 was applied to the surface of a commercially available glassy carbon until the film thickness became 0.2 µm. After removal of the heptane by evaporation, the glassy carbon was put in a strainless steel reactor, a fluorine gas diluted to 5 % with argon was introduced into the reactor for 30 minutes to react the fluorine gas with the coated glassy carbon.
A hydrophobic glassy carbon was obtained.

The hydrophobic carbon thus formed exhibited a strong hydrophobicity, whereby an angle of contact reached 110° which is close to 118° , an officially announced value. ESCA surface analysis confirmed the formation of a fluorine compound.

### Example 3

The film-forming solution of Example 1 was applied to commercially available carbon black (specific surface area 250 m ²/g ) and dried to form a 10 weight % of a polyethylene coat. After, the carbon black was put in a stainless steel reactor, a fluorine gas diluted to 3 % with argon was introduced into the reactor for one hour at room temperature and then a fluorine gas diluted to 10 % was introduced for two hours to fluorinated the coated carbon black. A hydrophobic carbon black was obtained.

## Claims

1. A process for preparing a material having a hydrophobic surface which comprises applying a hydrocarbon polymer compound solution to the surface of material to be treated, evaporating the solvent of the solution to coat the surface with a film of hydrocarbon polymer and then fluorinating the hydrocarbon polymer film.

2. A process for preparing hydrophobic material of Claim 1, wherein the hydrocarbon polymer compound is a polyethylene, a polypropylene, or a copolymer of ethylene and propylene.

3. A process for preparing hydrophobic material of Claim 1, wherein the solvent is a hydrocarbon solvent.

4. A process for preparing hydrophobic material of Claim 1, wherein fluorination is performed employing a diluted fluorine, gas.

## Patentansprüche

1. Verfahren zur Erzeugung eines Materials mit hydrophober Oberfläche, bestehend aus Aufbringen einer Kohlenwasserstoff-Polymer-Verbindungs-Lösung auf die Oberfläche des zu behandelnden Materials, Verdampfen des Lösungsmittels der Lösung zum Beschichten der Oberfläche mit einem Film aus Kohlenwasserstoffpolymer und dann Fluorination des Kohlenwasserstoff-Polymer-Films.

2. Verfahren zur Erzeugung eines hydrophoben Materials nach Anspruch 1,
**dadurch gekennzeichnet,** daß die Kohlenwasserstoff-Polymer-Verbindung ein Polyethylen, ein Polypropylen oder ein Copolymer von Ethylen und Propylen ist.

3. Verfahren zur Erzeugung eines hydrophoben Materials nach Anspruch 2,
**dadurch gekennzeichnet**, daß das Lösungsmittel ein Kohlenwasserstoff-Lösungsmittel ist.

4. Verfahren zur Erzeugung eines hydrophoben Materials nach Anspruch 1,
**dadurch gekennzeichnet,** daß die Fluorination unter Verwendung eines verdünnten Fluorgases ausgeführt wird.

## Revendications

1. Procédé pour préparer un matériau ayant une surface hydrophobe, comprenant l'application d'une solution de polymère hydrocarboné sur la surface du matériau à traiter, l'évaporation du solvant de la solution pour recouvrir la surface avec un film de polymère hydrocarboné puis la fluoration du film de polymère hydrocarboné.

2. Procédé pour préparer un matériau hydrophobe selon la revendication 1, dans lequel le polymère hydrocarboné est un polyéthylène, un polypropylène ou un copolymère d'éthylène et de propylène.

3. Procédé pour préparer un matériau hydrophobe selon la revendication 1, dans lequel le solvant est un solvant hydrocarbure.

4. Procédé pour préparer un matériau hydrophobe selon la revendication 1 dans lequel la fluoration est mise en oeuvre en utilisant un gaz de fluor dilué.
